# EUROPEAN PATENT APPLICATION

(11) **EP 4 344 301 A1**
(43) Date of publication of application: **27.03.2024**
(21) Application number: 22862743.6
(22) Date of filing: 19.05.2022
(51) Int. Cl.: H04W 36/08

(54) **TERMINAL ROAMING CONTROL METHOD AND APPARATUS, AND ROAMING POLICY LIBRARY GENERATION METHOD AND APPARATUS**

(30) Priority: 30.08.2021 CN 202111006333
(71) Applicant: Huawei Technologies Co., Ltd., Longgang Shenzhen, Guangdong 518129 (CN)
(72) Inventor: WANG, Haiyan, Shenzhen, Guangdong 518129 (CN); XIONG, Rugang, Shenzhen, Guangdong 518129 (CN); LI, Qi, Shenzhen, Guangdong 518129 (CN); LI, Fan, Shenzhen, Guangdong 518129 (CN)
(74) Representative: Thun, Clemens
(86) International application number: PCT/CN2022/093889
(87) International publication number: WO 2023/029601

(57) **Abstract**

This application discloses a terminal roaming control method and apparatus and a roaming policy library generation method and apparatus. The method includes: A gateway device obtains a roaming policy library; obtains, based on the roaming policy library, a first roaming policy matching a first terminal, where the first terminal is a terminal connected to the gateway device; and controls the first terminal to roam according to the first roaming policy.

## Description

This application claims priority to Chinese Patent Application No. 202111006333.1, filed on August 30, 2021 and entitled "TERMINAL ROAMING CONTROL METHOD AND APPARATUS AND ROAMING POLICY LIBRARY GENERATION METHOD AND APPARATUS", which is incorporated herein by reference in its entirety.

### TECHNICAL FIELD

This application relates to the field of network technologies, and in particular, to a terminal roaming control method and apparatus and a roaming policy library generation method and apparatus.

### BACKGROUND

A process in which a terminal switches from a currently connected wireless access point (access point, AP) to another AP is referred to as roaming.

In a wireless network, an upper-level device (for example, a gateway device) of an AP performs terminal roaming control in the following manner: When a signal strength between a terminal and the AP is lower than a threshold, a switching instruction is sent to the terminal, to instruct the terminal to perform roaming switching.

### SUMMARY

This application provides a terminal roaming control method and apparatus and a roaming policy library generation method and apparatus, to improve roaming efficiency, and improve communication quality.

According to a first aspect, this application provides a terminal roaming control method. The method is executed by a gateway device, and includes the following steps: The gateway device obtains a roaming policy library; the gateway device obtains, based on the roaming policy library, a first roaming policy matching a first terminal, where the first terminal is a terminal connected to the gateway device; and the gateway device controls the first terminal to roam according to the first roaming policy. The roaming capability information describes indicators involved when the first terminal roams.

In this implementation, the matched roaming policy is determined for the first terminal from the roaming policy library. In this way, the determined roaming policy best matches a capability of the first terminal, so that the first terminal can successfully roams according to the roaming policy, and roaming efficiency and communication quality of the terminal are ensured.

The controlling roaming of the first terminal herein means controlling, according to the roaming policy, the terminal to perform roaming switching when a roaming switching condition in the roaming policy is met (for example, signal strength reaches a threshold) when the first terminal moves. The controlling herein includes but is not limited to: controlling the first terminal to change a channel; reducing management power of the first terminal; and forcibly disconnecting the first terminal. The foregoing manner is generally for a terminal that can perform switching automatically. Switching thresholds of some terminals are set excessively high, so that signal strength of the terminal is excessively low before roaming switching. This affects service running of the terminal. The foregoing manners can force the terminal to perform roaming switching by changing a channel, reducing power, or forcibly kicking out (disconnecting) the terminal before the terminal switches, to ensure the signal strength. Changing the channel can implement roaming switching between APs and roaming switching between 2.4 GHz and 5 GHz in a same AP.

In addition, when a roaming switching threshold of an AP is low, a switching instruction is sent before the terminal actively switches. However, if the terminal does not listen to an opinion of the AP, the instruction wastes resources. In the solution of this application, switching is forcibly performed, and the AP does not need to send an instruction again, thereby saving resources.

In addition to the foregoing roaming policy, the roaming policy in this application further includes: Active roaming control is not performed, and the terminal autonomously completes roaming; and a plurality of APs are controlled to provide independent Wireless Fidelity Wi-Fi access for the terminal. For example, when the terminal does not move, the terminal repeatedly switches between the plurality of APs. For such a terminal, only one AP in the plurality of APs can access the terminal, and other APs do not respond to an access request of the AP, so that independent Wi-Fi access is implemented.

For example, the roaming capability information includes at least one of the following:
mobility, a radio frequency capability, a roaming protocol capability, a roaming behavior after switching, and an autonomous switching capability.

The mobility indicates whether a terminal is a mobile terminal. For example, a mobile phone, a notebook computer, or a tablet computer has mobility, and a desktop computer does not have mobility. The radio capability includes whether dual-band is supported, transmit power, receiver sensitivity, a power difference between 2.4 GHz and 5 GHz, and the like. The roaming protocol capability indicates whether the terminal supports roaming protocols such as 802.11kvr, 802.11kv, and 802.11r. The roaming behavior after the switching includes normal roaming, a sticky terminal, a subsequent access problem caused by being kicked out, and the like. The sticky terminal is a terminal that is still connected to an original AP after being kicked out. The autonomous switching capability indicates whether the terminal actively performs roaming switching, or the AP needs to actively control the terminal to perform roaming switching.

In an implementation of this application, obtaining a roaming policy matching roaming capability information of the first terminal includes at least the following two manners:
Manner 1: Obtain the roaming capability information of the first terminal; and determine the roaming policy matching the roaming capability information of the first terminal. To be specific, before the roaming policy matching the roaming capability information of the first terminal is determined, the roaming capability information of the first terminal needs to be obtained in the method.

For example, the obtaining the roaming capability information of the first terminal includes:
obtaining a device index of the first terminal; and
determining the roaming capability information of the first terminal based on the device index of the first terminal.

For example, the device index is at least one of a device model and a media access control MAC address.

A correspondence between the device index and the roaming capability information is preconfigured by a network management device for the gateway device, so that the gateway device can accurately determine the roaming capability information of the first terminal.

For example, the roaming policy library includes roaming sub-policies corresponding to the different values of the roaming capability information of the first terminal. It should be noted that, in this application, items involved in roaming capability information of different terminals are the same, but values of same roaming capability information of different terminals may be the same or different. Therefore, "the different values of the roaming capability information of the first terminal" herein actually includes a value of the roaming capability information that may exist in any terminal, that is, the roaming policy library can be used to determine a roaming sub-policy corresponding to any terminal. When a terminal is selected as the first terminal, values of pieces of the roaming capability information of the first terminal is determined. Therefore, the roaming policy can be determined based on the roaming policy library.

For example, the obtaining a first roaming policy matching a first terminal includes:
determining, based on the roaming sub-policies respectively corresponding to the different values of each piece of roaming capability information of the first terminal, a plurality of roaming sub-policies corresponding to the first terminal; and
obtaining the first roaming policy based on the plurality of roaming sub-policies corresponding to the first terminal.

Herein, the roaming policy is determined for the first terminal based on the roaming capability of the first terminal, so that the determined roaming policy best matches the capability of the first terminal, and the first terminal can successfully roam according to the roaming policy.

The roaming policy library is preconfigured by a network management device for the gateway device, so that the gateway device can accurately determine the roaming policy matching the roaming capability information of the first terminal.

For example, the roaming sub-policies respectively corresponding to the different values of each piece of roaming capability information of the first terminal include at least one of the following:
first roaming sub-policies respectively corresponding to different values of mobility of the first terminal, where the first roaming sub-policy indicates whether the terminal roams;
second roaming sub-policies respectively corresponding to different values of a radio frequency capability of the first terminal, where the second roaming sub-policy indicates a roaming parameter used when the terminal roams;
third roaming sub-policies respectively corresponding to different values of a roaming protocol capability of the first terminal, where the third roaming sub-policy indicates a roaming protocol or a switching mode of the terminal;
fourth roaming sub-policies respectively corresponding to different values of a roaming behavior of the first terminal after switching, where the fourth roaming sub-policy indicates whether the terminal roams and the switching mode used when the terminal roams; and
fifth roaming sub-policies respectively corresponding to different values of an autonomous switching capability of the first terminal, where the fifth roaming sub-policy indicates a switching subject of the terminal during roaming.

For example, the obtaining the first roaming policy based on the plurality of roaming sub-policies corresponding to the first terminal includes:
when all roaming sub-policies corresponding to the first terminal indicate roaming, determining, from the plurality of roaming sub-policies corresponding to the first terminal, at least one of the roaming protocol, the roaming parameter, the switching mode, and the switching subject during roaming, to obtain the first roaming policy.

If any one of the roaming agreement, the roaming parameter, the switching mode, and the switching subject is not limited in the roaming policy, a default value is used.

Optionally, when a roaming sub-policy corresponding to any one item in the roaming capability information of the first terminal is not roaming, it is determined that the roaming policy matching the roaming capability information of the first terminal is not roaming.

Optionally, the method further includes:
receiving the correspondence between the device index and the roaming capability information and the roaming policy library that are sent by the network management device.

Manner 2: Obtain a device index of the first terminal; and determine, based on the device index, the roaming policy matching the roaming capability information of the first terminal.

For example, the roaming policy library includes a correspondence between a device index and a roaming policy; and
the obtaining a first roaming policy matching a first terminal includes:
obtaining the device index of the first terminal; and
determining, based on the correspondence between the device index and the roaming policy, the first roaming policy corresponding to the device index of the first terminal.

In a possible implementation of this application, the controlling the first terminal to roam according to the roaming policy includes:
when the first terminal meets a roaming switching condition in the roaming policy, controlling the first terminal in at least one of the following manners, so that the first terminal roams:
controlling the first terminal to change a channel; reducing management power of the first terminal; and forcibly disconnecting the first terminal.

According to a second aspect, this application provides a roaming policy library generation method, and the method includes:

A network management device obtains roaming data; and
the network management device generates a roaming policy library based on the roaming data, where the roaming policy library is used by a gateway device to obtain a first roaming policy matching a first terminal; and controls the first terminal to roam according to the first roaming policy, where the first terminal is a terminal connected to the gateway device.

In this implementation, the gateway device generates the roaming policy library based on the roaming data, so that the gateway device can determine the matched roaming policy for the first terminal from the roaming policy library. In this way, the determined roaming policy best matches a capability of the first terminal. If the first terminal has a roaming capability, the first terminal can successfully roams according to the roaming policy, and roaming efficiency and communication quality of the terminal are ensured.

Optionally, the roaming policy library includes roaming sub-policies respectively corresponding to different values of each piece of roaming capability information of the first terminal; and
the generating a roaming policy library based on the roaming data includes:
constructing a terminal roaming behavior library based on the roaming data, where the terminal roaming behavior library includes pieces of roaming capability information and roaming fingerprints that are of a plurality of terminals; and
determining, based on the pieces of roaming capability information and the roaming fingerprints of the plurality of terminals, roaming sub-policies respectively corresponding to different values of each piece of roaming capability information of the first terminal.

Optionally, the method further includes:
obtaining device information and roaming behavior records of a plurality of terminals;
determining the pieces of roaming capability information of the plurality of terminals based on the device information and the roaming behavior records of the plurality of terminals;
generating a correspondence between a device index and roaming capability information based on device indexes in the device information of the plurality of terminals, so that the gateway device determines the roaming capability information of the first terminal; and
sending the correspondence between the device index and the roaming capability information to the gateway device.

Optionally, the determining the pieces of roaming capability information of the plurality of terminals based on the device information and the roaming behavior records of the plurality of terminals includes:
determining, based on at least one of the device information and the roaming behavior records of the plurality of terminals, a second terminal in the plurality of terminals that does not support a fast roaming agreement; and
determining, in the following manner, a roaming behavior in pieces of roaming capability information of the second terminal after switching:
   sending an instruction to the gateway device, where the instruction instructs the gateway device to control, when signal strength of the second terminal is less than a threshold, the second terminal to disconnect a network; and
   if the second terminal switches successfully after disconnecting the network, determining that the roaming behavior of the second terminal after the switching is normal roaming; if the second terminal is still connected to an original access device, determining that the roaming behavior of the second terminal after the switching is a roaming behavior of a sticky terminal; or if the second terminal cannot normally access the network, determining that an access problem exists in the roaming behavior of the second terminal after the switching.

Optionally, the roaming capability information includes at least one of the following:
mobility, a radio frequency capability, a roaming protocol capability, the roaming behavior after the switching, and an autonomous switching capability.

Optionally, the roaming policy library includes a correspondence between a device index and a roaming policy; and
the generating a roaming policy library based on the roaming data includes:
constructing a terminal roaming behavior library based on the roaming data, where the terminal roaming behavior library includes pieces of roaming capability information and roaming fingerprints that are of a plurality of terminals;
determining, based on the pieces of roaming capability information and the roaming fingerprints of the plurality of terminals, roaming sub-policies respectively corresponding to different values of each piece of roaming capability information of the first terminal;
determining, based on the roaming sub-policies respectively corresponding to the different values of each piece of roaming capability information of the first terminal, a plurality of roaming sub-policies corresponding to a third terminal in the plurality of terminals, where the third terminal is any terminal in the plurality of terminals;
obtaining a roaming policy of the third terminal based on the plurality of roaming sub-policies corresponding to the third terminal; and
associating the roaming policy of the third terminal with a device index of the third terminal, to obtain the correspondence between the device index and the roaming policy.

Optionally, the device index is at least one of a device model and a media access control MAC address.

Optionally, the method further includes:
sending the roaming policy library to the gateway device.

According to a third aspect, this application provides a terminal roaming control apparatus, and the apparatus includes:
a first obtaining unit, configured to obtain a roaming policy library;
a second obtaining unit, configured to: obtain, based on the roaming policy library, a first roaming policy matching a first terminal, where the first terminal is a terminal connected to the terminal roaming control apparatus; and
a control unit, configured to control the first terminal to roam according to the first roaming policy.

Optionally, the roaming policy library includes roaming sub-policies respectively corresponding to different values of each piece of roaming capability information of the first terminal; and
the second obtaining unit is configured to: determine, based on the roaming sub-policies respectively corresponding to the different values of each piece of roaming capability information of the first terminal, a plurality of roaming sub-policies corresponding to the first terminal; and obtain the first roaming policy based on the plurality of roaming sub-policies corresponding to the first terminal.

Optionally, the roaming sub-policies respectively corresponding to the different values of each piece of roaming capability information of the first terminal include at least one of the following:
first roaming sub-policies respectively corresponding to different values of mobility of the first terminal, where the first roaming sub-policy indicates whether the terminal roams;
second roaming sub-policies respectively corresponding to different values of a radio frequency capability of the first terminal, where the second roaming sub-policy indicates a roaming parameter used when the terminal roams;
third roaming sub-policies respectively corresponding to different values of a roaming protocol capability of the first terminal, where the third roaming sub-policy indicates a roaming protocol or a switching mode of the terminal;
fourth roaming sub-policies respectively corresponding to different values of a roaming behavior of the first terminal after switching, where the fourth roaming sub-policy indicates whether the terminal roams and the switching mode used when the terminal roams; and
fifth roaming sub-policies respectively corresponding to different values of an autonomous switching capability of the first terminal, where the fifth roaming sub-policy indicates a switching subject of the terminal during roaming.

Optionally, the second obtaining unit is configured to: when all roaming sub-policies corresponding to the first terminal indicate roaming, determine, from the plurality of roaming sub-policies corresponding to the first terminal, at least one of the roaming protocol, the roaming parameter, the switching mode, and the switching subject during roaming, to obtain the first roaming policy.

Optionally, the first obtaining unit is further configured to: before obtaining the first roaming policy matching the first terminal, obtain a device index of the first terminal; and determine, based on the device index of the first terminal, the roaming capability information of the first terminal.

Optionally, the roaming capability information includes at least one of the following:
the mobility, the radio frequency capability, the roaming protocol capability, the roaming behavior after the switching, and the autonomous switching capability.

Optionally, the roaming policy library includes a correspondence between a device index and a roaming policy; and
the second obtaining unit is configured to: obtain a device index of the first terminal; and determine, based on the correspondence between the device index and the roaming policy, the first roaming policy corresponding to the device index of the first terminal.

Optionally, the device index is at least one of a device model and a media access control MAC address.

Optionally, the control unit is configured to: when the first terminal meets a roaming switching condition in the roaming policy, control the first terminal in at least one of the following manners, so that the first terminal roams: controlling the first terminal to change a channel; reducing management power of the first terminal; and forcibly disconnecting the first terminal.

According to a fourth aspect, this application provides a roaming policy library generation apparatus, and the apparatus includes:
an obtaining unit, configured to obtain roaming data; and
a processing unit, configured to: generate a roaming policy library based on the roaming data, where the roaming policy library is used by a gateway device to obtain a first roaming policy matching a first terminal; and control the first terminal to roam according to the first roaming policy, where the first terminal is a terminal connected to the gateway device.

Optionally, the roaming policy library includes roaming sub-policies respectively corresponding to different values of each piece of roaming capability information of the first terminal; and
the processing unit is configured to: construct a terminal roaming behavior library based on the roaming data, where the terminal roaming behavior library includes pieces of roaming capability information and roaming fingerprints that are of a plurality of terminals; and determine, based on the pieces of roaming capability information and the roaming fingerprints of the plurality of terminals, roaming sub-policies respectively corresponding to different values of each piece of roaming capability information of the first terminal.

Optionally, the obtaining unit is further configured to obtain device information and roaming behavior records of a plurality of terminals;
the processing unit is further configured to: determine the pieces of roaming capability information of the plurality of terminals based on the device information and the roaming behavior records of the plurality of terminals; and generate a correspondence between a device index and roaming capability information based on device indexes in the device information of the plurality of terminals, so that the gateway device determines the roaming capability information of the first terminal; and
the apparatus further includes a sending unit, configured to send the correspondence between the device index and the roaming capability information to the gateway device.

Optionally, the processing unit is configured to: determine, based on at least one of the device information and the roaming behavior records of the plurality of terminals, a second terminal in the plurality of terminals that does not support a fast roaming agreement; and determine, in the following manner, a roaming behavior in pieces of roaming capability information of the second terminal after switching:
controlling the sending unit to send an instruction to the gateway device, where the instruction instructs the gateway device to control, when signal strength of the second terminal is less than a threshold, the second terminal to disconnect a network; and
if the second terminal switches successfully after disconnecting the network, determining that the roaming behavior of the second terminal after the switching is normal roaming; if the second terminal is still connected to an original access device, determining that the roaming behavior of the second terminal after the switching is a roaming behavior of a sticky terminal; or if the second terminal cannot normally access the network, determining that an access problem exists in the roaming behavior of the second terminal after the switching.

Optionally, the roaming capability information includes at least one of the following:
mobility, a radio frequency capability, a roaming protocol capability, the roaming behavior after the switching, and an autonomous switching capability.

Optionally, the roaming policy library includes a correspondence between a device index and a roaming policy; and
the processing unit is configured to: construct a terminal roaming behavior library based on the roaming data, where the terminal roaming behavior library includes pieces of roaming capability information and roaming fingerprints that are of a plurality of terminals; and determine, based on the pieces of roaming capability information and the roaming fingerprints of the plurality of terminals, roaming sub-policies respectively corresponding to different values of each piece of roaming capability information of the first terminal; determine, based on the roaming sub-policies respectively corresponding to the different values of each piece of roaming capability information of the first terminal, a plurality of roaming sub-policies corresponding to a third terminal in the plurality of terminals, where the third terminal is any terminal in the plurality of terminals; obtain a roaming policy of the third terminal based on the plurality of roaming sub-policies corresponding to the third terminal; and associate the roaming policy of the third terminal with a device index of the third terminal, to obtain the correspondence between the device index and the roaming policy.

Optionally, the device index is at least one of a device model and a media access control MAC address.

Optionally, the apparatus further includes:
a sending unit, configured to send the roaming policy library to the gateway device.

According to a fifth aspect, this application provides a gateway device, where the gateway device includes a processor and a memory, the memory is configured to store a software program and a module, and the processor runs or executes the software program and/or the module stored in the memory, to implement the method according to any one of the possible implementations of the first aspect.

Optionally, there are one or more processors, and there are one or more memories.

Optionally, the memory may be integrated with the processor, or the memory and the processor are disposed separately.

In a specific implementation process, the memory may be a non-transitory (non-transitory) memory, for example, a read-only memory (read only memory, ROM). The memory and the processor may be integrated on a same chip, or may be disposed on different chips. A type of the memory and a manner of disposing the memory and the processor are not limited in this application.

According to a sixth aspect, this application provides a network management device, where the network management device includes a processor and a memory, the memory is configured to store a software program and a module, and the processor runs or executes the software program and/or the module stored in the memory, to implement the method according to any one of the possible implementations of the second aspect.

According to a seventh aspect, this application provides a computer program (product). The computer program (product) includes computer program code. When the computer program code is run by a computer, the computer is enabled to perform the method according to any one of the possible implementations of the first aspect or the second aspect.

According to an eighth aspect, this application provides a computer-readable storage medium. The computer-readable storage medium is configured to store program code executed by a processor. The program code is for implementing the method according to any one of the possible implementations of the first aspect or the second aspect.

According to a ninth aspect, a chip is provided, and includes a processor. The processor is configured to invoke, from a memory, and run instructions stored in the memory, so that a communication device on which the chip is installed performs the method according to any one of the possible implementations of the first aspect or the second aspect.

According to a tenth aspect, another chip is provided, and includes an input interface, an output interface, a processor, and a memory. The input interface, the output interface, the processor, and the memory are connected to each other through an internal connection channel. The processor is configured to execute code in the memory. When the code is executed, the processor is configured to perform the method according to any one of the possible implementations of the first aspect or the second aspect.

### BRIEF DESCRIPTION OF DRAWINGS

FIG. 1 is a schematic diagram of an application scenario according to an embodiment of this application;
FIG. 2 is a schematic diagram of a structure of a gateway device according to an embodiment of this application;
FIG. 3 is a schematic diagram of a structure of a network management device according to an embodiment of this application;
FIG. 4 is a flowchart of a terminal roaming control method according to an embodiment of this application;
FIG. 5 is a flowchart of another terminal roaming control method according to an embodiment of this application;
FIG. 6 is a flowchart of another terminal roaming control method according to an embodiment of this application;
FIG. 7 is a schematic flowchart of sticky terminal verification according to an embodiment of this application;
FIG. 8 is a schematic diagram of a terminal roaming control method according to an embodiment of this application;
FIG. 9 is a schematic diagram of a structure of a terminal roaming control apparatus according to an embodiment of this application; and
FIG. 10 is a schematic diagram of a structure of a terminal roaming control apparatus according to an embodiment of this application.

### DESCRIPTION OF EMBODIMENTS

To make objectives, technical solutions, and advantages of this application clearer, the following further describes implementations of this application in detail with reference to the accompanying drawings.

For ease of understanding of the technical solutions provided in embodiments of this application, an application scenario of this application is first described. This application scenario includes a terminal, an access device, a gateway device, and a network management device. The terminal and the access device are connected wirelessly, and the gateway device is connected to the access device and the network management device separately. The following uses a home network scenario as an example to describe the application scenario provided in this application.

In the home network scenario, the terminal is a station (station, STA), for example, a mobile phone, a tablet computer, a notebook computer, or a smart wearable device; the access device is an AP, and the AP is a wireless fidelity (wireless fidelity, Wi-Fi) relay device configured to enhance home network coverage; the gateway device is an optical network terminal (optical network terminal, ONT), a gateway agent (agent) is installed in the ONT, and the agent is an executable program, and is configured to implement connection between the network management device and the gateway device (where the ONT is not connected to the network management device by default); and the network management device is a cloud management system, for example, a network cloud engine (network cloud engine, NCE) configured to remotely manage a home gateway.

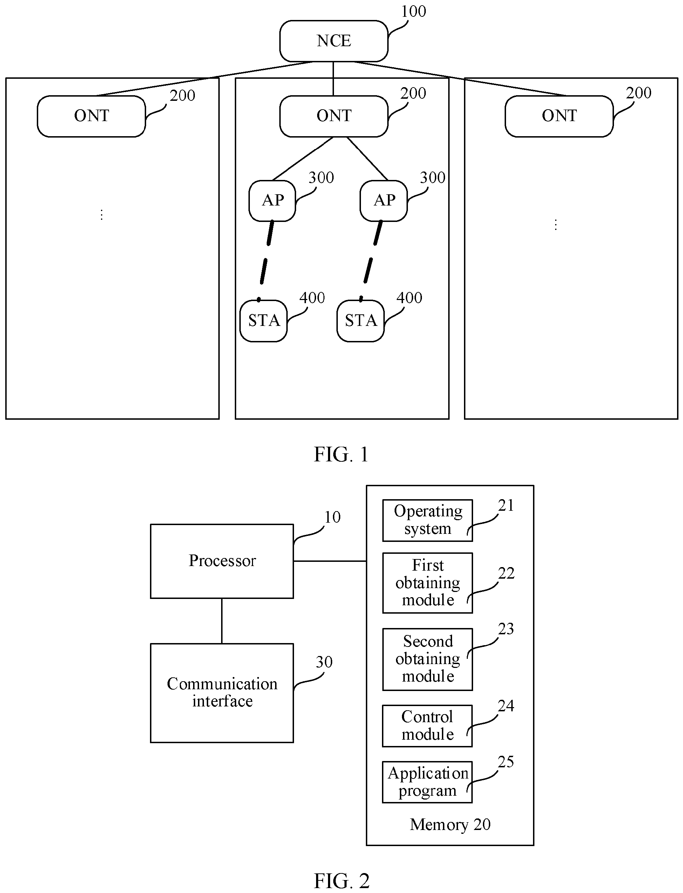

FIG. 1 is a schematic diagram of an application scenario according to an embodiment of this application. Refer to FIG. 1. One NCE 100 is connected to a plurality of ONTs 200. One ONT 200 serves as a home gateway, and may be connected to a plurality of APs 300. A STA 400 accesses one of the APs 300. When a location of the STA 400 moves, the STA 400 may switch from the AP 300 originally accessed by the STA 400 to a new AP 300. Thus, roaming is implemented.

Roaming is jointly determined by the AP and the terminal. Different terminals and APs have different capabilities, and may cause the following problems:
When the terminal and the AP perform roaming switching, switching thresholds are different. For example, a roaming switching threshold of the AP is lower than a switching threshold of the terminal. This causes a case in which the AP sends a switching instruction before the terminal actively switches. However, if the terminal does not listen to an opinion of the AP, the instruction wastes resources. In addition, a terminal roaming switching threshold is excessively high. Consequently, before the terminal actively roams, signal strength is excessively low, communication quality is poor, and a service requirement of the terminal cannot be met.

The terminal pretends to support the 802.11kv protocol (where the terminal nominally supports this protocol but does not support this protocol in actual work), or the terminal is a sticky terminal (where in a case of weak signals, the terminal reconnects to an original AP after disconnecting the AP). If the two cases are not interfered with, roaming efficiency of the terminal is poor, the communication quality is poor, and the service requirement of the terminal cannot be met.

FIG. 2 is a schematic diagram of a possible hardware structure of a gateway device (such as an ONT) in the application scenario shown in FIG. 1. As shown in FIG. 2, the gateway device includes a processor 10, a memory 20, and a communication interface 30. A person skilled in the art may understand that the structure shown in FIG. 2 does not constitute any limitation to the gateway device. The gateway device may include more or fewer components than those shown in the figure, or a combination of some components, or components disposed differently. Specifically:
The processor 10 is a control center of the gateway device, and connects various parts of the entire gateway device by using various interfaces or lines, and performs various functions of the gateway device and processes data by running or executing a software program stored in the memory 20 and invoking data stored in the memory 20, to perform overall control on the gateway device. The processor 10 may be a CPU, or may be another general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It is to be noted that the processor may be a processor that supports an advanced reduced instruction set computing machine (advanced RISC machine, ARM) architecture.

The memory 20 may be configured to store a software program and a module. By running the software program and the module that are stored in the memory 20, the processor 10 performs various function applications and data processing. The memory 20 may mainly include a program storage area and a data storage area. The program storage area may store an operating system 21, a first obtaining module 22, a second obtaining module 23, a control module 24, an application program 25 (such as an encoding application program) required by one or more functions, and the like. The data storage area may store data (for example, a service type identification model) created based on use of UE or a target server. The memory 20 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). Correspondingly, the memory 20 may further include a memory controller, to provide the processor 10 with access to the memory 20.

The processor 10 executes the following function by running the first obtaining module 22: obtaining a roaming policy library. The processor 10 executes the following function by running the second obtaining module 23: obtaining, based on the roaming policy library, a first roaming policy matching a first terminal, where the first terminal is a terminal connected to a terminal roaming control apparatus. The processor 10 executes the following function by running the control module 24: controlling the first terminal to roam according to the first roaming policy.

An embodiment of this application further provides a chip, including a processor. The processor is configured to invoke instructions from a memory, and run the instructions stored in the memory, so that a communication device on which the chip is installed performs any terminal roaming control method provided in this application.

An embodiment of this application further provides a chip, including an input interface, an output interface, a processor, and a memory. The input interface, the output interface, the processor, and the memory are connected to each other through an internal connection path. The processor is configured to execute code in the memory. When the code is executed, the processor is configured to perform any terminal roaming control method provided above.

It should be understood that the processor may be a CPU, or may be another general purpose processor, a DSP, an ASIC, an FPGA or another programmable logic device, a discrete gate or a transistor logic device, a discrete hardware component, or the like. The general-purpose processor may be a microprocessor, any conventional processor, or the like. It is to be noted that the processor may be a processor that supports an ARM architecture.

Further, in an optional embodiment, there are one or more processors and one or more memories. Optionally, the memory may be integrated with the processor, or the memory and the processor are disposed separately. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and serves as an external cache. By way of example but not limitation, many forms of RAMs may be used, for example, an SRAM, a DRAM, an SDRAM, a DDR SDRAM, an ESDRAM, an SLDRAM, and a DR RAM.

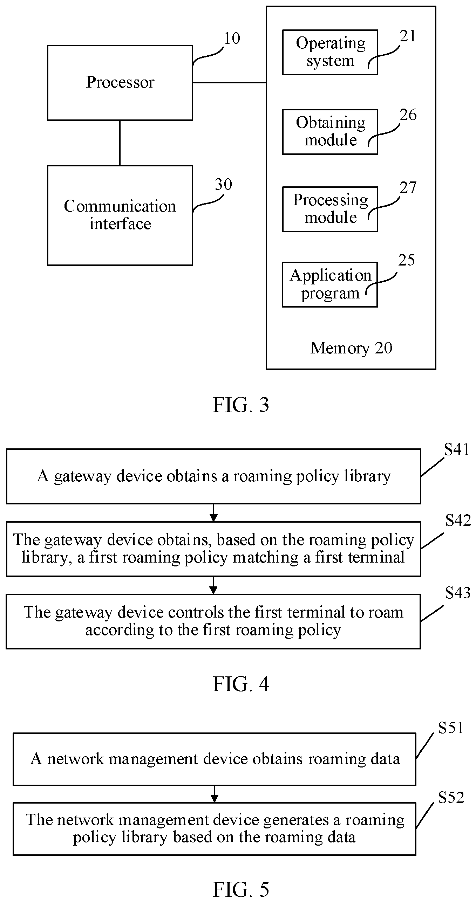

FIG. 3 is a schematic diagram of a possible hardware structure of a network management device (such as an NCE) in the application scenario shown in FIG. 1. As shown in FIG. 3, the network management device includes a processor 10, a memory 20, and a communication interface 30. A person skilled in the art may understand that the structure shown in FIG. 3 does not constitute any limitation to the network management device. The gateway device may include more or fewer components than those shown in the figure, or a combination of some components, or components disposed differently. Specifically:
The processor 10 is a control center of the network management device, and connects various parts of the entire network management device by using various interfaces or lines, and performs various functions of the network management device and processes data by running or executing a software program stored in the memory 20 and invoking data stored in the memory 20, to perform overall control on the network management device. The processor 10 may be a CPU, or may be another general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It is to be noted that the processor may be a processor that supports an advanced reduced instruction set computing machine (advanced RISC machine, ARM) architecture.

The memory 20 may be configured to store a software program and a module. By running the software program and the module that are stored in the memory 20, the processor 10 performs various function applications and data processing. The memory 20 may mainly include a program storage area and a data storage area. The program storage area may store an operating system 21, an obtaining module 26, a processing module 27, an application program 25 (such as an encoding application program) required by one or more functions, and the like. The data storage area may store data (for example, a service type identification model) created based on use of UE or a target server. The memory 20 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). Correspondingly, the memory 20 may further include a memory controller, to provide the processor 10 with access to the memory 20.

The processor 10 executes the following function by running the obtaining module 26: obtaining roaming data. The processor 10 executes the following function by running the processing module 27: generating a roaming policy library based on the roaming data, where the roaming policy library is used by a gateway device to obtain a first roaming policy matching a first terminal; and controlling the first terminal to roam according to the first roaming policy, where the first terminal is a terminal connected to the gateway device.

An embodiment of this application further provides a chip, including a processor. The processor is configured to invoke instructions from a memory, and run the instructions stored in the memory, so that a communication device on which the chip is installed performs any roaming policy library generation method provided in this application.

An embodiment of this application further provides a chip, including an input interface, an output interface, a processor, and a memory. The input interface, the output interface, the processor, and the memory are connected to each other through an internal connection path. The processor is configured to execute code in the memory. When the code is executed, the processor is configured to perform any terminal roaming control method provided above.

It should be understood that the processor may be a CPU, or may be another general purpose processor, a DSP, an ASIC, an FPGA or another programmable logic device, a discrete gate or a transistor logic device, a discrete hardware component, or the like. The general-purpose processor may be a microprocessor, any conventional processor, or the like. It is to be noted that the processor may be a processor that supports an ARM architecture.

Further, in an optional embodiment, there are one or more processors and one or more memories. Optionally, the memory may be integrated with the processor, or the memory and the processor are disposed separately. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and serves as an external cache. By way of example but not limitation, many forms of RAMs may be used, for example, an SRAM, a DRAM, an SDRAM, a DDR SDRAM, an ESDRAM, an SLDRAM, and a DR RAM.

FIG. 4 is a flowchart of a terminal roaming control method according to an embodiment of this application. The method may be executed by a gateway device (such as an ONT) in the application scenario shown in FIG. 1. As shown in FIG. 4, the method includes the following steps.

S41: The gateway device obtains a roaming policy library.

The roaming policy library is configured to provide roaming policies suitable for various different terminals, so that roaming efficiency of the terminals can be improved, and communication quality can be further improved. In addition to the roaming policies (or roaming sub-policies forming the roaming policies), the roaming policy library further includes index information corresponding to the roaming policies. Herein, the index information is used for matching a terminal with a roaming policy, for example, may be roaming capability information or a device index.

S42: The gateway device obtains, based on the roaming policy library, a first roaming policy matching a first terminal.

The first terminal is a terminal accessed by the gateway device that executes the method.

For example, the gateway device obtains a first roaming policy matching roaming capability information of the first terminal. The roaming capability information describes indicators involved when the first terminal roams.

For example, the roaming capability information includes at least one of the following:
mobility, a radio frequency capability, a roaming protocol capability, a roaming behavior after switching, and an autonomous switching capability.

The mobility indicates whether a terminal is a mobile terminal. For example, a mobile phone, a notebook computer, or a tablet computer has mobility, and a desktop computer does not have mobility. The radio capability includes whether dual-band is supported, transmit power, receiver sensitivity, a power difference between 2.4 GHz and 5 GHz, and the like. The roaming protocol capability indicates whether the terminal supports roaming protocols such as 802.11kvr, 802.11kv, and 802.11r. The roaming behavior after the switching includes normal roaming, a sticky terminal, a subsequent access problem caused by being kicked out, and the like. The sticky terminal is a terminal that is still connected to an original AP after being kicked out. The autonomous switching capability indicates whether the terminal actively performs roaming switching, or the AP needs to actively control the terminal to perform roaming switching.

Herein, the roaming policy matching the roaming capability information of the first terminal is an optimal roaming solution that can be implemented within a roaming capability range of the first terminal. If the first terminal can support roaming, the solution can ensure roaming efficiency of the first terminal and communication quality of the terminal.

In this embodiment of this application, S41 includes at least the following two manners:
Manner 1: Obtain the roaming capability information of the first terminal; and determine the roaming policy matching the roaming capability information of the first terminal.
Manner 2: Obtain a device index of the first terminal; and determine, based on the device index, the roaming policy matching the roaming capability information of the first terminal.

S43: The gateway device controls the first terminal to roam according to the first roaming policy.

The controlling roaming of the first terminal herein means controlling, according to the roaming policy, the terminal to perform roaming switching when a roaming switching condition in the roaming policy is met (for example, signal strength reaches a threshold) when the first terminal moves. The controlling herein includes but is not limited to: controlling the first terminal to change a channel; reducing management power of the first terminal; and forcibly disconnecting the first terminal. The foregoing manner is generally for a terminal that can perform switching automatically. Switching thresholds of some terminals are set excessively high, so that signal strength of the terminal is excessively low before roaming switching. This affects service running of the terminal. The foregoing manners can force the terminal to perform roaming switching by changing a channel, reducing power, or forcibly kicking out (disconnecting) the terminal before the terminal switches, to ensure the signal strength. Changing the channel can implement roaming switching between APs and roaming switching between 2.4 GHz and 5 GHz in a same AP.

In addition, when a roaming switching threshold of an AP is low, a switching instruction is sent before the terminal actively switches. However, if the terminal does not listen to an opinion of the AP, the instruction wastes resources. In the solution of this application, switching is forcibly performed, and the AP does not need to send an instruction again, thereby saving resources.

In addition to the foregoing roaming policy, the roaming policy in this application further includes: Active roaming control is not performed, and the terminal autonomously completes roaming; and a plurality of APs are controlled to provide independent Wireless Fidelity Wi-Fi access for the terminal. For example, when the terminal does not move, the terminal repeatedly switches between the plurality of APs. For such a terminal, only one AP in the plurality of APs can access the terminal, and other APs do not respond to an access request of the AP, so that independent Wi-Fi access is implemented.

In this embodiment of this application, the matched roaming policy is determined for the first terminal from the roaming policy library. In this way, the determined roaming policy best matches a capability of the first terminal, so that the first terminal can successfully roams according to the roaming policy, and the roaming efficiency and the communication quality of the terminal are ensured.

FIG. 5 is a flowchart of a roaming policy library generation method according to an embodiment of this application. The method may be executed by a network management device (such as an NCE) in the application scenario shown in FIG. 1. As shown in FIG. 5, the method includes the following steps.

S51: A network management device obtains roaming data.

The roaming data includes at least one of laboratory roaming data and network roaming data.

S52: The network management device generates a roaming policy library based on the roaming data, where the roaming policy library is used by a gateway device to obtain a first roaming policy matching a first terminal; and controls the first terminal to roam according to the first roaming policy, where the first terminal is a terminal connected to the gateway device.

Herein, for descriptions of the roaming policy library, refer to the embodiment corresponding to FIG. 4.

In this embodiment of this application, the gateway device generates the roaming policy library based on the roaming data, so that the gateway device can determine the matched roaming policy for the first terminal from the roaming policy library. In this way, the determined roaming policy best matches a capability of the first terminal. If the first terminal has a roaming capability, the first terminal can successfully roams according to the roaming policy, and roaming efficiency and communication quality of the terminal are ensured.

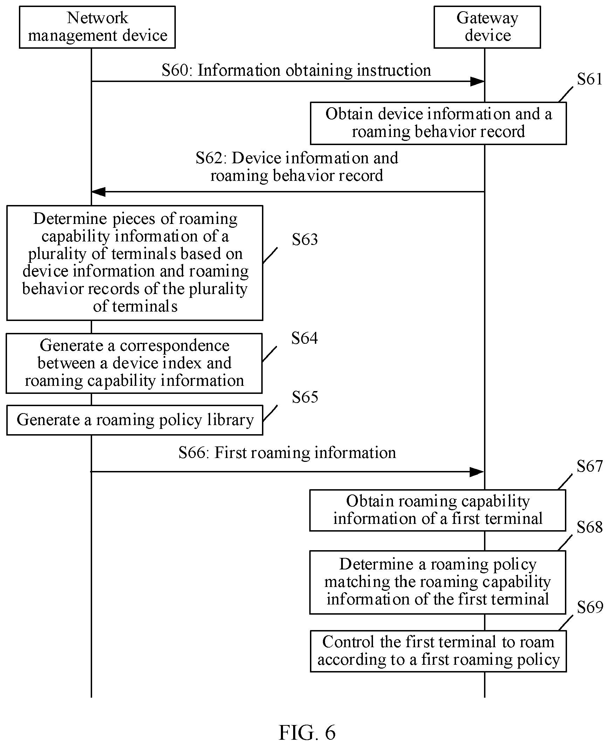

FIG. 6 is a flowchart of a terminal roaming control method according to an embodiment of this application. The method may be jointly executed by a gateway device (such as an ONT) and a network management device (such as an NCE) in the application scenario shown in FIG. 1. As shown in FIG. 6, the method includes the following steps.
S60: The network management device sends an information obtaining instruction to the gateway device; and the gateway device receives the information obtaining instruction sent by the network management device.

For example, a home network integrates a gateway agent into the gateway device according to a specific specification, and after the gateway agent is started, the gateway agent connects to the network management device by using a remote protocol (for example, a message queuing telemetry transport (message queuing telemetry transport, MQTT) protocol). The network management device of the home network controls a home gateway by sending requests.

The network management device sends a GET_SUB_DEVICE_LIST command to the gateway agent through a remote channel to collect device information and roaming behavior records of terminals connected to the gateway device.

The remote channel is a channel between the network management device and the gateway device.

S61: The gateway device obtains the device information and the roaming behavior records in response to the information obtaining instruction.

In this embodiment of this application, the terminal/access device accesses the gateway device by using a dynamic host configuration protocol (dynamic host configuration protocol, DHCP) protocol, and the gateway device records allocated DHCP information, including device information such as a media access control (media access control, MAC) address of a device, a device name, an access frequency band (for example, 2.4 GHz or 5 GHz), and a negotiated quantity of antennas (for example, 1*1, 2*2, or 4*4), a negotiated rate, and a Wi-Fi access mode (for example, b: 802.11b; g: 802.11g; n: 802.11n; a: 802.11a; ac: 802.11ac; or ax: 802.11ax), a user agent (User Agent), and a capability of supporting 11kvr.

In this embodiment of this application, a manner in which the gateway device obtains the device information is as follows: obtaining the device information from the recorded DHCP information.

Optionally, in addition to the device information included in the DHCP information, the device information further includes a terminal model. A manner of obtaining the terminal model is as follows: The gateway agent intercepts all Hypertext Transfer Protocol (hypertext transfer protocol, HTTP) messages, and parses User Agent list information in an HTTP message header to obtain the terminal model.

The following Table 1 shows an example of obtaining the terminal model by parsing the User Agent list information in the HTTP protocol message header.

**Table 1**

| Device MAC | HTTP User Agent | Operating system | Device model |
|---|---|---|---|
| 3C:EF:8C:FF:20:F3 | Mozilla/5.0 (Linux; Android 4.4.2; HW-HUAWEI MT7-CL00 Build/HuaweiMT7-CL00) | Linux | HuaweiMT7-CL00 |
| | AppleWebKit/537.36 (KHTML, like Gecko) Version/4.0 Mobile Safari/537.36 | | |
| 3C:EF:8C:FF:20:F3 | Mozilla/5.0 (Windows NT 10.0; Win64; x64) AppleWebKit/537.36 (KHTML, like Gecko) Chrome/56.0.2911.0 | Windows | Windows NT 10.0 |
| | Safari/537.36 | | |
| B8-6B-23-77-B0-BA | Mozilla/5.0 (Windows NT 10.0; WOW64) AppleWebKit/537.36 (KHTML, like Gecko) | Windows NT 10.0 | Windows NT 10.0 |
| | Chrome/76.0.3809.100 Safari/537.36 | | |

In this embodiment of this application, a manner in which the gateway device obtains the roaming behavior record is as follows: collecting messages indicating that the terminal goes offline and goes online, and recording a roaming event, to obtain the roaming behavior record. The roaming behavior record is shown in Table 2 below.

**Table 2 Roaming behavior record**

| Chinese name | English name | Instruction name | Detailed field |
|---|---|---|---|
| 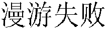 | Roaming Failed | STA_ROAM_FAILED | It is detected that a connected terminal fails in roaming switching, and the terminal does not respond to a roaming instruction for long time. |
| | | | Switching mode: {roamMode}, upper-level device before switching: |
| | | | {apN ameB efore}({apMacB efore}). |
| 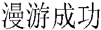 | Roaming Successful | STA_ROAM_SUCCESS _V2 | Delay: {interval} milliseconds, switching mode: {roamMode}, upper-level device before switching: |
| | | | {fbtApName}({fbtAPMac}), signal strength {fbtRssi}; upper-level device after switching: |
| | | | {targetApNameMac}({targetApNameM ac}), signal strength {targetRssi}. |
| 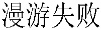 | Roaming Failed | STA_ROAM_FAILED_ V2 | Reason: {fbtResult}, switching mode: {roamMode}: upper-level device before switching: {fbtApName}({fbtAPMac}), signal strength {fbtRssi}, suggested upper-level device after switching: |
| | | | {targetApNameMac}({targetApNameM ac}), signal strength {targetRssi} |
| 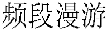 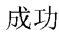 | / | STA_BAND_STEER_S UCCESS_V2 | Delay: {SteeringTime} milliseconds, original frequency band: {OldBand}, signal strength {OldRSSI}, frequency band after switching: {NewBand}, signal strength {NewRSSI}. |
| 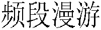 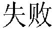 | / | STA_BAND_STEER_F AILED_V2 | Delay: {SteeringTime} milliseconds, switching reason: {SteeringReason}, original frequency band: {OldBand}, signal strength {OldRSSI}, frequency band after switching: {NewBand}, signal strength {NewRSSI}. |

With reference to Table 2, the following describes the fields in Table 2:
roamMode indicates the switching mode, where a value supports internationalization, and includes: 0-11v switching, 1-kicking out after a target AP is selected, 2-forcibly kicking out, and 3-the terminal actively initiates switching;
apNameBefore indicates a name of the upper-level device before the switching, where if the device name of the upper-level exists, the device name is replied with, or if the device name of the upper-level does not exist, the device model is replied with;
apMacBefore indicates a MAC address of the upper-level device before the switching;
interval indicates a delay in the unit of milliseconds;
fbtAPMac indicates a MAC address of a serving AP;
fbtAPName indicates a device name of the serving AP;
fbtSTAMac indicates a MAC address of a terminal;
targetAPMac indicates a MAC address of the target AP for roaming, where this field is valid when the roaming switching mode is 0 or 1;
targetAPName indicates a device name of the target AP for roaming, where this field is valid when the roaming switching mode is 0 or 1;
currentRssi indicates signal strength of an AP currently connected to the terminal, in the unit of dBm;
targetRssi indicates signal strength that is of the target AP and that is detected by the terminal by using 11k, in the unit of dBm;
fbtResult indicates a current roaming result, where the values are enumerated as follows:
   Canceled: the roaming is canceled,
   StaRefused: the STA rejects the switching,
   StaNotExecute: the STA does not respond to the switching,
   ApRefused: the target AP rejects, and
   TimeOut: the roaming times out;
SteeringTime indicates switching time;
SteeringReason indicates a switching reason;
OldBand indicates the original frequency band;
OldRSSI indicates signal strength in the original frequency band, in the unit of dBm;
NewBand indicates a new frequency band;
NewRSSI indicates signal strength in the new frequency band, in the unit of dBm; and
Result indicates a current result, where the values are enumerated as follows:
   Success: the roaming succeeds, and
   Failed: the roaming fails.

It is to be noted that the signal strength collected in the roaming behavior record is collected periodically (for example, collected every 5 minutes), that is, the record includes a string of signal strength values.

S62: The gateway device sends the device information and the roaming behavior record to the network management device; and the network management device receives the device information and the roaming behavior record that are sent by the gateway device.

S63: The network management device determines pieces of roaming capability information of a plurality of terminals based on device information and roaming behavior records of the plurality of terminals.

In this embodiment of this application, the roaming capability information includes at least one of the following:
mobility, a radio frequency capability, a roaming protocol capability, a roaming behavior after switching, and an autonomous switching capability.

The network management device determines the pieces of roaming capability information based on the device information and the roaming behavior record. The following describes a determining method of each item with reference to Table 3.

**Table 3**

| Roaming capability information | Category | Identification solution |
|---|---|---|
| Mobility | Fixed device | Determine a signal strength change of the terminal based on the signal strength collected in the roaming behavior record; and identify a terminal type based on signal strength change features of a fixed device and a mobile device, where the terminal type includes the foregoing fixed device and mobile device. |
| | Mobile device | |
| Radio frequency capability | Supporting dual-band | Determine, based on the roaming behavior record, whether the terminal has accessed the 5 GHz frequency band. If the terminal has accessed the 5 GHz frequency band, the terminal supports dual-band; otherwise, the terminal does not support dual-band. |
| | Only supporting single-band | |
| | Threshold of roaming switching between different APs (namely, roaming switching condition) | Identify through roaming events. |
| | | For example, a switching threshold is determined based on signal strength when the roaming succeeds and signal strength when the roaming fails. The threshold is within a signal strength range when the roaming succeeds and is beyond the signal strength range when the roaming fails. |
| | | For example, if the signal strength of the terminal ranges from -72 dBm to -80 dBm when the roaming succeeds, the terminal does not respond when the signal strength is another value, and the threshold may be set to -75 dBm. |
| | Threshold of roaming switching between 2.4G and 5G of a same AP | |
| Roaming protocol capability | Supporting 802.11kvr (11kvr for short) | Determine, based on the 11kvr supporting capability in the device information, whether the terminal supports 11kvr. When the device information indicates that the terminal does not support 11kvr, determine that the terminal does not support 11kvr; or when the device information indicates that the terminal supports 11kv but does not support 11r, determine that the terminal supports 11kv but does not support 11r. |
| | Supporting 802.11kv (11kv for short), and not supporting 802.11r (11r for short) | |
| | | When the device information indicates that the terminal supports 11kvr, determine, again based on the roaming behavior record, whether the terminal |
| | Pretending to support 11kv | |
| | Not supporting 11kvr | supports 11kvr. |
| | | If it is determined again that the terminal supports 11kvr, determine that the terminal supports 11kvr; otherwise, determine that the terminal pretends to support 11kvr. |
| Roaming behavior after switching | Normal roaming | Determine, based on the device information and the roaming behavior record, whether the device supports 11kvr. If the terminal supports 11kvr, determine that the terminal can roam normally. |
| | Sticky terminal | |
| | Subsequent access problem caused by being kicked out | If the terminal does not support 11kvr, the network management device marks the terminal as a sticky terminal to be verified, and notifies the gateway device, and the gateway device forcibly kicks the terminal out of the network connection when a signal of the terminal is weak; or if the terminal switches successfully, it is determined that the terminal can normally roam. If the terminal is still connected to the original AP, it indicates that the terminal is a sticky terminal. If the terminal cannot normally access the network, it is determined that an access problem occurs after the terminal is kicked out. |
| Autonomous switching capability | Supporting autonomous switching | Determine based on the switching mode in the roaming behavior record. For example, if "3-the terminal actively initiates roaming" exists in a terminal roaming succeeds event, the terminal supports autonomous switching. |
| | Not supporting autonomous switching | |

In addition to determining whether the terminal supports dual-band based on a maximum model access capability, the terminal may alternatively be directly carry information indicating whether the terminal supports dual-band in the device information, that is, the device information further includes information indicating whether the terminal supports dual-band. The information may be manually marked, for example, manually marked by using an interface of the gateway device or a tool.

Optionally, the sticky terminal in Table 3 is a terminal that is still connected to the original AP after being kicked out. The determining whether a terminal is a sticky terminal is specific to a case in which two or more APs of a same model exist in a topology, because a terminal of one AP cannot roam, and a plurality of APs of the same model ensures that a problem that APs of different models cannot access the network is excluded.

For example, the network management device determines, based on at least one of the device information and the roaming behavior records of the plurality of terminals, a second terminal in the plurality of terminals that does not support a fast roaming agreement (802. 11kvr); and
determines, in the following manner, the roaming behavior in pieces of roaming capability information of the second terminal after the switching:
sending an instruction to the gateway device, where the instruction instructs the gateway device to control, when signal strength of the second terminal is less than a threshold, the second terminal to disconnect a network; and
if the second terminal switches successfully after disconnecting the network, determining that the roaming behavior of the second terminal after the switching is normal roaming (a non-sticky terminal); if the second terminal is still connected to an original access device, determining that the roaming behavior of the second terminal after the switching is a roaming behavior of a sticky terminal; or if the second terminal cannot normally access the network, determining that an access problem exists in the roaming behavior of the second terminal after the switching.

For a terminal that supports the fast roaming protocol (802. 11kvr), normal roaming is performed by default after the switching.

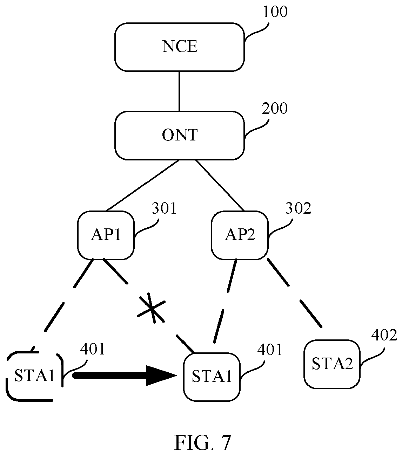

FIG. 7 is a schematic diagram of sticky terminal verification according to this application. Refer to FIG. 7. A terminal STA1 401 originally accesses an AP1 301. As the terminal STA1 401 moves (where an arrow in the figure indicates a moving direction), signal strength between the terminal STA1 401 and the AP1 gradually decreases. In this case, an ONT 200 controls the AP1 301 to kick out the STA1 401, where a line with a cross in the figure is interrupted as the STA1 401 is kicked out. In this case, the STA1 401 reconnects to an AP2 302. In this case, it indicates that the STA1 is not a sticky terminal. If the STA1 that is kicked out reconnects to the AP1, it indicates that the STA1 is a sticky terminal.

In addition, most parameters in the roaming capability information obtaining solution provided in this solution are automatically obtained by using a roaming learning algorithm, and manual maintenance is not required, so that high efficiency and low costs are achieved.

Roaming capability information of terminals of a plurality of models can be obtained based on Table 3 and model information of the terminals, as shown in Table 4.

**Table 4**

| Model | Terminal device feature | Category |
|---|---|---|
| HUAWEI Mate 40 Pro | Mobility | Mobile device |
| | Radio frequency capability | Supporting dual-band |
| | | Roaming switching threshold: |
| | | high density (high terminal density): 5G: -70 dBm, 2.4G: -72 dBm; and |
| | | low density (low terminal density): 5G: -74 dBm, 2.4G: -78 dBm. |
| | Roaming protocol capability | Supporting 11kvr |
| | Roaming behavior after switching | Normal roaming |
| | Autonomous switching capability | Supporting autonomous switching |

S64: The network management device generates a correspondence between a device index and roaming capability information based on device indexes in the device information of the plurality of terminals, so that the gateway device determines the roaming capability information of the first terminal.

The device index is at least one of a device model and a MAC address. Table 4 shows a correspondence in which the device model is used as the device index.

S65: The network management device generates a roaming policy library.

In a possible implementation, the roaming policy library includes roaming sub-policies respectively corresponding to different values of each piece of roaming capability information of the terminal (where because the terminal is not limited herein, the roaming sub-policies may alternatively be considered as roaming sub-policies corresponding to different values of each piece of roaming capability information of the first terminal). Correspondingly, step S65 includes:
constructing a terminal roaming behavior library based on the roaming data, where the terminal roaming behavior library includes pieces of roaming capability information and roaming fingerprints that are of a plurality of terminals; and
determining, based on the pieces of roaming capability information and the roaming fingerprints of the plurality of terminals, roaming sub-policies respectively corresponding to different values of pieces of roaming capability information of the terminal.

The roaming data herein includes at least one of laboratory roaming data and network roaming data.

For example, the network management device constructs a terminal roaming behavior library based on the roaming data by using a roaming learning algorithm.

The roaming capability information is similar to Table 3 in step S63, and may be further simplified into a format of Table 5 as follows:

**Table 5**

| Model | Roaming protocol capability | Autonomous switching capability | Roaming behavior after switching |
|---|---|---|---|
| STA1 | K/V/R | Autonomous and controllable | Non-sticky |
| STA2 | K/V | Controllable | Non-sticky |
| STA3 | NULL | Autonomous | Non-sticky |

The model corresponds to the mobility and the radio frequency capability in Table 3. The roaming protocol capabilities K, V, and R respectively represent 802.11k, 802.11kv, and 802.11kvr.

The roaming fingerprint is information about each roaming of the terminal, and content included in the roaming fingerprint is shown in Table 6. A delay and a packet loss in the roaming fingerprint can indicate whether current roaming succeeds or fails.

**Table 6**

| | Time | Manner | Duration (ms) | Signal (dBm) | Delay (ms) | Packet loss (%) |
|---|---|---|---|---|---|---|
| STA1 | 16:08 | Instructing | 220 | -72 | 350 | 0.8% |
| STA2 | 17:00 | Instructing | 250 | -68 | 260 | 0 |
| STA3 | 17:25 | Autonomous | 500 | -80 | 1315 | 5% |

For example, the determining, based on the pieces of roaming capability information and the roaming fingerprints of the plurality of terminals, roaming sub-policies respectively corresponding to different values of each piece of roaming capability information of the first terminal includes:
determining, based on the mobility in the roaming capability information, whether the terminal needs to roam, to obtain roaming sub-policies corresponding to different values of mobility, where a correspondence between mobility and whether roaming is needed may be preset in the network management device;
determining, based on the radio frequency capability in the roaming capability information, an appropriate roaming switching mode, for example, whether roaming on 2.4G and 5G frequency bands is performed; and determining, based on thresholds for roaming switching (including successful switching and failed switching) in roaming fingerprints of a plurality of terminals of a same model, a threshold range suitable for roaming of the terminal; mapping the determined switching mode and threshold range to a radio frequency capability threshold, to obtain the roaming sub-policies respectively corresponding to the different values of the radio frequency capability;
determining, based on the roaming protocol capability in the roaming capability information, a switching protocol supported by the terminal, to obtain roaming sub-policies respectively corresponding to the different values of the roaming protocol capability;
determining a switching mode of the terminal based on the roaming behavior after the switching in the roaming capability information, to obtain roaming sub-policies corresponding to the different values of the roaming behavior after the switching, where the roaming behavior after the switching and the switching mode may be preset in the network management device; and
determining, based on the autonomous switching capability in the roaming capability information, whether the gateway performs active control, to obtain roaming sub-policies respectively corresponding to the different values of the autonomous switching capability, where the autonomous switching capability and whether the gateway performs active control may be preset in the network management device.

In conclusion, the determining, based on the pieces of roaming capability information and the roaming fingerprints of the plurality of terminals, roaming sub-policies respectively corresponding to different values of each piece of roaming capability information of the first terminal is shown in Table 7 below:

**Table 7**

| Roaming capability information | Category | Roaming sub-policy | Supplementary descriptions |
|---|---|---|---|
| Mobility | Fixed device | Not roaming | The fixed device usually cannot roam. |
| | Mobile device | Roaming | / |
| Radio frequency capability | Supporting dual-band | Roaming in 2.4 GHz and 5 GHz frequency bands | Dual-band capability is identified. |
| | Only supporting single-band | Not roaming in 2.4 GHz and 5 GHz frequency bands | / |
| | Threshold of roaming switching between different APs | Setting roaming switching thresholds specifically for different terminals | Identify through roaming events. In addition, in a use process, adjust to an optimal threshold parameter based on a use effect feedback of the terminal. |
| | Threshold of roaming switching between 2.4G and 5G of a same AP | Setting roaming switching thresholds specifically for different terminals | Identify through roaming events. In addition, in a use process, adjust to an optimal threshold parameter based on a use effect feedback of the terminal. |
| Roaming protocol capability | Supporting 11kvr | 11k detection, 11r fast switching | / |
| | Support 11kv, not supporting 11r | 11k detection, 11v switching | / |
| | Pretending to support 11kv | Not performing 11kv roaming for this type of terminal | Identify this type of device and mark it as not supporting 11kv |
| | Not supporting 11kvr | Triggering roaming for such terminals by forcibly kicking out the terminal | / |
| Roaming behavior after switching | Normal roaming | Associating with a new AP first, and then disconnecting from an original AP | / |
| | | Disconnecting from an original AP first, and then associating with a new AP | / |
| | Sticky terminal | Not switching for this type of terminal | Identify a sticky terminal, and do not perform switching. |
| | Subsequent access problem caused by being kicked out | Not forcibly kicking out this type of terminal | Identify this type of terminal, and do not perform forcibly kicking out. |
| Autonomous switching capability | Supporting autonomous switching | Cooperating with the terminal to perform automatic switching, where the switching controlled by the gateway actively may be not considered. | Identify behavior characteristics of automatic switching (for example, a threshold for triggering automatic switching) to avoid conflicts with gateway switching. |
| | Not supporting autonomous switching | Actively controlling switching | / |

In a possible implementation, the roaming policy library includes a correspondence between a device index and a roaming policy. Correspondingly, step S65 includes:
constructing a terminal roaming behavior library based on the roaming data, where the terminal roaming behavior library includes pieces of roaming capability information and roaming fingerprints that are of a plurality of terminals;
determining, based on the pieces of roaming capability information and the roaming fingerprints of the plurality of terminals, roaming sub-policies respectively corresponding to different values of each piece of roaming capability information of the first terminal;
determining, based on the roaming sub-policies respectively corresponding to the different values of each piece of roaming capability information of the first terminal, a plurality of roaming sub-policies corresponding to a third terminal in the plurality of terminals, where the third terminal is any terminal in the plurality of terminals;
obtaining a roaming policy of the third terminal based on the plurality of roaming sub-policies corresponding to the third terminal; and
associating the roaming policy of the third terminal with a device index of the third terminal, to obtain the correspondence between the device index and the roaming policy.

A difference from the first solution lies in that, after roaming sub-policies respectively corresponding to the different values of each piece of roaming capability information of the first terminal are determined, roaming policies of different device models or MAC addresses are directly determined, and a correspondence is generated, to facilitate use of the gateway device and save computing resources of the gateway device.

It should be noted that a sequence of step S65 and steps S61 to S64 is not limited. For example, step S65 and steps S61 to S64 are performed simultaneously, or step S65 is performed before steps S61 to S64, or step S65 is performed after steps S61 to S64.

S66: The network management device sends first roaming information to the gateway device. The gateway device receives the first roaming information sent by the network management device.

In this embodiment of this application, the first roaming information sent by the network management device to the gateway device includes the roaming policy library and a correspondence between the device index and the roaming capability information. In this case, the roaming policy library usually includes roaming sub-policies respectively corresponding to different values of each piece of roaming capability information of the first terminal. The following steps are described by using this as an example.

In another embodiment, the first roaming information includes only the roaming policy library. In this case, the roaming policy library includes the correspondence between the device index and the roaming policy.

In this application, the roaming policy library and the correspondence between the device index and the roaming capability information are simultaneously sent to the gateway device, or the roaming policy library and the correspondence between the device index and the roaming capability information are separately sent to the gateway device.

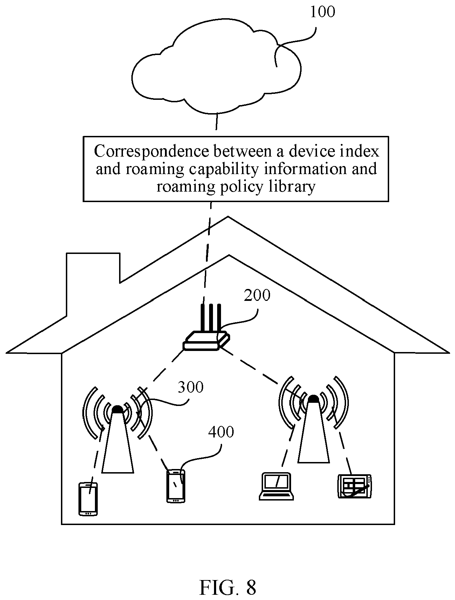

FIG. 8 is a schematic diagram of roaming control in a home network according to this application. Refer to FIG. 8. An NCE 100 serving as a network management device sends a roaming policy library and a correspondence between a device index and roaming capability information to an ONT 200 serving as a gateway device, so that the ONT 200 can implement roaming control on terminals 400 such as a mobile phone and a notebook computer by using an AP 300.

S67: The gateway device obtains the roaming capability information of the first terminal.

For example, step S67 includes:
obtaining the device index of the first terminal; and
determining the roaming capability information of the first terminal based on the device index of the first terminal.

S68: The gateway device determines a roaming policy matching the roaming capability information of the first terminal.

For example, step S68 includes:
obtaining a first roaming policy matching the first terminal, where the step includes:
determining, based on the roaming sub-policies respectively corresponding to the different values of each piece of roaming capability information of the first terminal, a plurality of roaming sub-policies corresponding to the first terminal; and
obtaining the first roaming policy based on the plurality of roaming sub-policies corresponding to the first terminal.

For example, the roaming sub-policies respectively corresponding to the different values of each piece of roaming capability information of the first terminal include at least one of the following:
first roaming sub-policies respectively corresponding to different values of mobility of the first terminal, where the first roaming sub-policy indicates whether the terminal roams;
second roaming sub-policies respectively corresponding to different values of a radio frequency capability of the first terminal, where the second roaming sub-policy indicates a roaming parameter used when the terminal roams;
third roaming sub-policies respectively corresponding to different values of a roaming protocol capability of the first terminal, where the third roaming sub-policy indicates a roaming protocol or a switching mode of the terminal;
fourth roaming sub-policies respectively corresponding to different values of a roaming behavior of the first terminal after switching, where the fourth roaming sub-policy indicates whether the terminal roams and the switching mode used when the terminal roams; and
fifth roaming sub-policies respectively corresponding to different values of an autonomous switching capability of the first terminal, where the fifth roaming sub-policy indicates a switching subject of the terminal during roaming.

The obtaining the first roaming policy based on the plurality of roaming sub-policies corresponding to the first terminal includes:
when all roaming sub-policies corresponding to the first terminal indicate roaming, determining, from the plurality of roaming sub-policies corresponding to the first terminal, at least one of the roaming protocol, the roaming parameter, the switching mode, and the switching subject during roaming, to obtain the first roaming policy.

Table 8 is a simple example of a roaming policy table of the terminal determined in this application.

**Table 8**

| | Roaming trigger point | Roaming execution mode |
|---|---|---|
| STA1 | Signal strength difference > 8 dBm | Protocol-based fast roaming |
| STA2 | Signal strength < -68 dBm | Common roaming |
| STA3 | Signal strength difference > 6 dBm | Forcing to go offline |

S69: The gateway device controls the first terminal to roam according to the first roaming policy.

For example, when the first terminal meets a roaming switching condition in the roaming policy, the gateway device controls the first terminal in at least one of the following manners, so that the first terminal roams:
controlling the first terminal to change a channel; reducing management power of the first terminal; and forcibly disconnecting the first terminal.

The controlling roaming of the first terminal herein means controlling, according to the roaming policy, the terminal to perform roaming switching when a roaming switching condition in the roaming policy is met (for example, signal strength reaches a threshold) when the first terminal moves. The controlling herein includes but is not limited to: controlling the first terminal to change a channel; reducing management power of the first terminal; and forcibly disconnecting the first terminal. The foregoing manner is generally for a terminal that can perform switching automatically. Switching thresholds of some terminals are set excessively high, so that signal strength of the terminal is excessively low before roaming switching. This affects service running of the terminal. The foregoing manners can force the terminal to perform roaming switching by changing a channel, reducing power, or forcibly kicking out (disconnecting) the terminal before the terminal switches, to ensure the signal strength. Changing the channel can implement roaming switching between APs and roaming switching between 2.4 GHz and 5 GHz in a same AP.

In addition, when a roaming switching threshold of an AP is low, a switching instruction is sent before the terminal actively switches. However, if the terminal does not listen to an opinion of the AP, the instruction wastes resources. In the solution of this application, switching is forcibly performed, and the AP does not need to send an instruction again, thereby saving resources.

In addition to the foregoing roaming policy, the roaming policy in this application further includes: Active roaming control is not performed, and the terminal autonomously completes roaming; and a plurality of APs are controlled to provide independent Wireless Fidelity Wi-Fi access for the terminal. For example, when the terminal does not move, the terminal repeatedly switches between the plurality of APs. For such a terminal, only one AP in the plurality of APs can access the terminal, and other APs do not respond to an access request of the AP, so that independent Wi-Fi access is implemented.

In this step, the control manner of the gateway device includes but is not limited to: sending an instruction to perform control by using the AP, or directly controlling the terminal.

According to the method provided in this application, different roaming policies are used for different terminal devices, so that a roaming success rate can be ensured, and bandwidth of the terminal in a roaming process can be increased. In addition, because a roaming occasion is correct, a service of the terminal is not interrupted in the roaming process, and normal service running can be ensured.

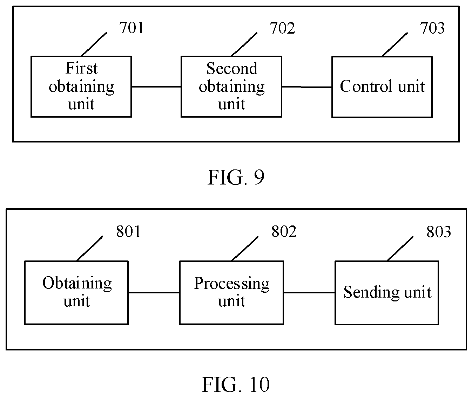

FIG. 9 is a block diagram of a terminal roaming control apparatus according to an embodiment of this application. The terminal roaming control apparatus may be implemented as all or a part of a gateway device by using software, hardware, or a combination of software and hardware. The terminal roaming control apparatus may include a first obtaining unit 701, a second obtaining unit 702, and a control unit 703.

The first obtaining unit 701 is configured to obtain a roaming policy library;
the second obtaining unit 702 is configured to: obtain, based on the roaming policy library, a first roaming policy matching a first terminal, where the first terminal is a terminal connected to the terminal roaming control apparatus; and
the control unit 703 is configured to control the first terminal to roam according to the first roaming policy.

Optionally, the roaming policy library includes roaming sub-policies respectively corresponding to different values of each piece of roaming capability information of the first terminal; and
the second obtaining unit 702 is configured to: determine, based on the roaming sub-policies respectively corresponding to the different values of each piece of roaming capability information of the first terminal, a plurality of roaming sub-policies corresponding to the first terminal; and obtain the first roaming policy based on the plurality of roaming sub-policies corresponding to the first terminal.

Optionally, the roaming sub-policies respectively corresponding to the different values of each piece of roaming capability information of the first terminal include at least one of the following:
first roaming sub-policies respectively corresponding to different values of mobility of the first terminal, where the first roaming sub-policy indicates whether the terminal roams;
second roaming sub-policies respectively corresponding to different values of a radio frequency capability of the first terminal, where the second roaming sub-policy indicates a roaming parameter used when the terminal roams;
third roaming sub-policies respectively corresponding to different values of a roaming protocol capability of the first terminal, where the third roaming sub-policy indicates a roaming protocol or a switching mode of the terminal;
fourth roaming sub-policies respectively corresponding to different values of a roaming behavior of the first terminal after switching, where the fourth roaming sub-policy indicates whether the terminal roams and the switching mode used when the terminal roams; and
fifth roaming sub-policies respectively corresponding to different values of an autonomous switching capability of the first terminal, where the fifth roaming sub-policy indicates a switching subject of the terminal during roaming.

Optionally, the second obtaining unit 702 is configured to: when all roaming sub-policies corresponding to the first terminal indicate roaming, determine, from the plurality of roaming sub-policies corresponding to the first terminal, at least one of the roaming protocol, the roaming parameter, the switching mode, and the switching subject during roaming, to obtain the first roaming policy.

Optionally, the first obtaining unit 701 is further configured to: before obtaining the first roaming policy matching the first terminal, obtain a device index of the first terminal; and determine, based on the device index of the first terminal, the roaming capability information of the first terminal.

Optionally, the roaming capability information includes at least one of the following:
mobility, a radio frequency capability, a roaming protocol capability, a roaming behavior after switching, and an autonomous switching capability.

Optionally, the roaming policy library includes a correspondence between a device index and a roaming policy; and
the second obtaining unit 702 is configured to: obtain a device index of the first terminal; and determine, based on the correspondence between the device index and the roaming policy, the first roaming policy corresponding to the device index of the first terminal.

Optionally, the device index is at least one of a device model and a media access control MAC address.

Optionally, the control unit 703 is configured to: when the first terminal meets a roaming switching condition in the roaming policy, control the first terminal in at least one of the following manners, so that the first terminal roams: controlling the first terminal to change a channel; reducing management power of the first terminal; and forcibly disconnecting the first terminal.

It is to be noted that, when the terminal roaming control apparatus provided in the foregoing embodiment performs roaming control, division into the foregoing function units is merely used as an example for description. In an actual application, the foregoing functions may be allocated to different function units for implementation as required. To be specific, an internal structure of the device is divided into different function units to implement all or some of the functions described above. In addition, the embodiments of the terminal roaming control apparatus and the terminal roaming control method provided in the foregoing embodiments pertain to a same concept. For a specific implementation process, refer to the method embodiments. Details are not described herein again.

FIG. 10 is a block diagram of a roaming policy library generation apparatus according to an embodiment of this application. The roaming policy library generation apparatus may be implemented as all or a part of a network management device by using software, hardware, or a combination of software and hardware. The roaming policy library generation apparatus may include an obtaining unit 801 and a processing unit 802.

The obtaining unit 801 is configured to obtain roaming data; and
the processing unit 802 is configured to: generate a roaming policy library based on the roaming data, where the roaming policy library is used by a gateway device to obtain a first roaming policy matching a first terminal; and control the first terminal to roam according to the first roaming policy, where the first terminal is a terminal connected to the gateway device.

Optionally, the roaming policy library includes roaming sub-policies respectively corresponding to different values of each piece of roaming capability information of the first terminal; and
the processing unit 802 is configured to: construct a terminal roaming behavior library based on the roaming data, where the terminal roaming behavior library includes pieces of roaming capability information and roaming fingerprints that are of a plurality of terminals; and determine, based on the pieces of roaming capability information and the roaming fingerprints of the plurality of terminals, roaming sub-policies respectively corresponding to different values of each piece of roaming capability information of the first terminal.

Optionally, the obtaining unit 801 is further configured to obtain device information and roaming behavior records of a plurality of terminals;
the processing unit 802 is further configured to: determine the pieces of roaming capability information of the plurality of terminals based on the device information and the roaming behavior records of the plurality of terminals; and generate a correspondence between a device index and roaming capability information based on device indexes in the device information of the plurality of terminals, so that the gateway device determines the roaming capability information of the first terminal; and
the apparatus further includes a sending unit 803, configured to send the correspondence between the device index and the roaming capability information to the gateway device.

Optionally, the processing unit 802 is configured to: determine, based on at least one of the device information and the roaming behavior records of the plurality of terminals, a second terminal in the plurality of terminals that does not support a fast roaming agreement; and determine, in the following manner, a roaming behavior in pieces of roaming capability information of the second terminal after switching:
controlling the sending unit 803 to send an instruction to the gateway device, where the instruction instructs the gateway device to control, when signal strength of the second terminal is less than a threshold, the second terminal to disconnect a network; and
if the second terminal switches successfully after disconnecting the network, determining that the roaming behavior of the second terminal after the switching is normal roaming; if the second terminal is still connected to an original access device, determining that the roaming behavior of the second terminal after the switching is a roaming behavior of a sticky terminal; or if the second terminal cannot normally access the network, determining that an access problem exists in the roaming behavior of the second terminal after the switching.

Optionally, the roaming capability information includes at least one of the following:
mobility, a radio frequency capability, a roaming protocol capability, the roaming behavior after the switching, and an autonomous switching capability.

Optionally, the roaming policy library includes a correspondence between a device index and a roaming policy; and
the processing unit 802 is configured to: construct a terminal roaming behavior library based on the roaming data, where the terminal roaming behavior library includes pieces of roaming capability information and roaming fingerprints that are of a plurality of terminals; and determine, based on the pieces of roaming capability information and the roaming fingerprints of the plurality of terminals, roaming sub-policies respectively corresponding to different values of each piece of roaming capability information of the first terminal; determine, based on the roaming sub-policies respectively corresponding to the different values of each piece of roaming capability information of the first terminal, a plurality of roaming sub-policies corresponding to a third terminal in the plurality of terminals, where the third terminal is any terminal in the plurality of terminals; obtain a roaming policy of the third terminal based on the plurality of roaming sub-policies corresponding to the third terminal; and associate the roaming policy of the third terminal with a device index of the third terminal, to obtain the correspondence between the device index and the roaming policy.

Optionally, the device index is at least one of a device model and a media access control MAC address.

Optionally, the apparatus further includes:
a sending unit 803, configured to send the roaming policy library to the gateway device.

It is to be noted that, when the roaming policy library generation apparatus provided in the foregoing embodiment generates the roaming policy library, division into the foregoing function units is merely used as an example for description. In an actual application, the foregoing functions may be allocated to different function units for implementation as required. To be specific, an internal structure of the device is divided into different function units to implement all or some of the functions described above. In addition, the embodiments of the roaming policy library generation apparatus and the roaming policy library generation method provided in the foregoing embodiments pertain to a same concept. For a specific implementation process, refer to the method embodiments. Details are not described herein again.

The descriptions of the procedures corresponding to the accompanying drawings have respective focuses. For a part that is not described in detail in a procedure, refer to related descriptions of another procedure.

An embodiment of this application further provides a computer-readable storage medium. The computer-readable storage medium stores computer instructions. When the computer instructions stored in the computer-readable storage medium are executed by a computer device, the computer device is enabled to perform the terminal roaming control method or the roaming policy library generation method provided above.

An embodiment of this application further provides a computer program product including instructions. When the computer program product runs on a computer device, the computer device is enabled to perform the terminal roaming control method or the roaming policy library generation method provided above.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive)), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A terminal roaming control method, wherein the method comprises:
obtaining, by a gateway device, a roaming policy library;
obtaining, by the gateway device based on the roaming policy library, a first roaming policy matching a first terminal, wherein the first terminal is a terminal connected to the gateway device; and
controlling, by the gateway device, the first terminal to roam according to the first roaming policy.

2. The method according to claim 1, wherein the roaming policy library comprises roaming sub-policies respectively corresponding to different values of each piece of roaming capability information of the first terminal; and
the obtaining a first roaming policy matching a first terminal comprises:
determining, based on the roaming sub-policies respectively corresponding to the different values of each piece of roaming capability information of the first terminal, a plurality of roaming sub-policies corresponding to the first terminal; and
obtaining the first roaming policy based on the plurality of roaming sub-policies corresponding to the first terminal.

3. The method according to claim 2, wherein the roaming sub-policies respectively corresponding to the different values of each piece of roaming capability information of the first terminal comprise at least one of the following:
first roaming sub-policies respectively corresponding to different values of mobility of the first terminal, wherein the first roaming sub-policy indicates whether the terminal roams;
second roaming sub-policies respectively corresponding to different values of a radio frequency capability of the first terminal, wherein the second roaming sub-policy indicates a roaming parameter used when the terminal roams;
third roaming sub-policies respectively corresponding to different values of a roaming protocol capability of the first terminal, wherein the third roaming sub-policy indicates a roaming protocol or a switching mode of the terminal;
fourth roaming sub-policies respectively corresponding to different values of a roaming behavior of the first terminal after switching, wherein the fourth roaming sub-policy indicates whether the terminal roams and the switching mode used when the terminal roams; and
fifth roaming sub-policies respectively corresponding to different values of an autonomous switching capability of the first terminal, wherein the fifth roaming sub-policy indicates a switching subject of the terminal during roaming.

4. The method according to claim 2 or 3, wherein the obtaining the first roaming policy based on the plurality of roaming sub-policies corresponding to the first terminal comprises:
when all roaming sub-policies corresponding to the first terminal indicate roaming, determining, from the plurality of roaming sub-policies corresponding to the first terminal, at least one of the roaming protocol, the roaming parameter, the switching mode, and the switching subject during roaming, to obtain the first roaming policy.

5. The method according to any one of claims 2 to 4, wherein before the obtaining a first roaming policy matching a first terminal, the method further comprises:
obtaining a device index of the first terminal; and
determining the roaming capability information of the first terminal based on the device index of the first terminal.

6. The method according to any one of claims 2 to 5, wherein the roaming capability information comprises at least one of the following:
the mobility, the radio frequency capability, the roaming protocol capability, the roaming behavior after the switching, and the autonomous switching capability.

7. The method according to claim 1, wherein the roaming policy library comprises a correspondence between a device index and a roaming policy; and
the obtaining a first roaming policy matching a first terminal comprises:
obtaining a device index of the first terminal; and
determining, based on the correspondence between the device index and the roaming policy, the first roaming policy corresponding to the device index of the first terminal.

8. The method according to claim 5 or 7, wherein the device index is at least one of a device model and a media access control MAC address.

9. The method according to any one of claims 1 to 8, wherein the controlling the first terminal to roam according to the first roaming policy comprises:
when the first terminal meets a roaming switching condition in the roaming policy, controlling the first terminal in at least one of the following manners, so that the first terminal roams:
controlling the first terminal to change a channel; reducing management power of the first terminal; and forcibly disconnecting the first terminal.

10. A roaming policy library generation method, wherein the method comprises:
obtaining, by a network management device, roaming data; and
generating, by the network management device, a roaming policy library based on the roaming data, wherein the roaming policy library is used by a gateway device to obtain a first roaming policy matching a first terminal; and controlling the first terminal to roam according to the first roaming policy, wherein the first terminal is a terminal connected to the gateway device.

11. The method according to claim 10, wherein the roaming policy library comprises roaming sub-policies respectively corresponding to different values of each piece of roaming capability information of the first terminal; and
the generating a roaming policy library based on the roaming data comprises:
constructing a terminal roaming behavior library based on the roaming data, wherein the terminal roaming behavior library comprises pieces of roaming capability information and roaming fingerprints that are of a plurality of terminals; and
determining, based on the pieces of roaming capability information and the roaming fingerprints of the plurality of terminals, roaming sub-policies respectively corresponding to the different values of each piece of roaming capability information of the first terminal.

12. The method according to claim 10 or 11, wherein the method further comprises:
obtaining device information and roaming behavior records of the plurality of terminals;
determining the pieces of roaming capability information of the plurality of terminals based on the device information and the roaming behavior records of the plurality of terminals;
generating a correspondence between a device index and roaming capability information based on device indexes in the device information of the plurality of terminals, so that the gateway device determines the roaming capability information of the first terminal; and
sending the correspondence between the device index and the roaming capability information to the gateway device.

13. The method according to claim 12, wherein the determining the pieces of roaming capability information of the plurality of terminals based on the device information and the roaming behavior records of the plurality of terminals comprises:
determining, based on at least one of the device information and the roaming behavior records of the plurality of terminals, a second terminal in the plurality of terminals that does not support a fast roaming agreement; and
determining, in the following manner, a roaming behavior in pieces of roaming capability information of the second terminal after switching:
sending an instruction to the gateway device, wherein the instruction instructs the gateway device to control, when signal strength of the second terminal is less than a threshold, the second terminal to disconnect a network; and
if the second terminal switches successfully after disconnecting the network, determining that the roaming behavior of the second terminal after the switching is normal roaming; if the second terminal is still connected to an original access device, determining that the roaming behavior of the second terminal after the switching is a roaming behavior of a sticky terminal; or if the second terminal cannot normally access the network, determining that an access problem exists in the roaming behavior of the second terminal after the switching.

14. The method according to any one of claims 10 to 13, wherein the roaming capability information comprises at least one of the following:
mobility, a radio frequency capability, a roaming protocol capability, the roaming behavior after the switching, and an autonomous switching capability.

15. The method according to claim 10, wherein the roaming policy library comprises a correspondence between a device index and a roaming policy; and
the generating a roaming policy library based on the roaming data comprises:
constructing a terminal roaming behavior library based on the roaming data, wherein the terminal roaming behavior library comprises pieces of roaming capability information and roaming fingerprints that are of a plurality of terminals;
determining, based on the pieces of roaming capability information and the roaming fingerprints of the plurality of terminals, roaming sub-policies respectively corresponding to different values of each piece of roaming capability information of the first terminal;
determining, based on the roaming sub-policies respectively corresponding to the different values of each piece of roaming capability information of the first terminal, a plurality of roaming sub-policies corresponding to a third terminal in the plurality of terminals, wherein the third terminal is any terminal in the plurality of terminals;
obtaining a roaming policy of the third terminal based on the plurality of roaming sub-policies corresponding to the third terminal; and
associating the roaming policy of the third terminal with a device index of the third terminal, to obtain the correspondence between the device index and the roaming policy.

16. The method according to claim 12 or 15, wherein the device index is at least one of a device model and a media access control MAC address.

17. The method according to any one of claims 10 to 16, wherein the method further comprises:
sending the roaming policy library to the gateway device.

18. A terminal roaming control apparatus, wherein the apparatus comprises:
a first obtaining unit, configured to obtain a roaming policy library;
a second obtaining unit, configured to: obtain, based on the roaming policy library, a first roaming policy matching a first terminal, wherein the first terminal is a terminal connected to the terminal roaming control apparatus; and
a control unit, configured to control the first terminal to roam according to the first roaming policy.

19. The apparatus according to claim 18, wherein the roaming policy library comprises roaming sub-policies respectively corresponding to different values of each piece of roaming capability information of the first terminal; and
the second obtaining unit is configured to: determine, based on the roaming sub-policies respectively corresponding to the different values of each piece of roaming capability information of the first terminal, a plurality of roaming sub-policies corresponding to the first terminal; and obtain the first roaming policy based on the plurality of roaming sub-policies corresponding to the first terminal.

20. The apparatus according to claim 18, wherein the roaming policy library comprises a correspondence between a device index and a roaming policy; and
the second obtaining unit is configured to: obtain a device index of the first terminal; and determine, based on the correspondence between the device index and the roaming policy, the first roaming policy corresponding to the device index of the first terminal.

21. The apparatus according to any one of claims 18 to 20, wherein the control unit is configured to: when the first terminal meets a roaming switching condition in the roaming policy, control the first terminal in at least one of the following manners, so that the first terminal roams: controlling the first terminal to change a channel; reducing management power of the first terminal; and forcibly disconnecting the first terminal.

22. A roaming policy library generation apparatus, wherein the apparatus comprises:
an obtaining unit, configured to obtain roaming data; and
a processing unit, configured to: generate a roaming policy library based on the roaming data, wherein the roaming policy library is used by a gateway device to obtain a first roaming policy matching a first terminal; and control the first terminal to roam according to the first roaming policy, wherein the first terminal is a terminal connected to the gateway device.

23. A gateway device, wherein the gateway device comprises a processor and a memory, the memory is configured to store a software program, and the processor runs or executes the software program stored in the memory, so that the gateway device implements the method according to any one of claims 1 to 9.

24. A network management device, wherein the network management device comprises a processor and a memory, the memory is configured to store a software program, and the processor runs or executes the software program stored in the memory, so that network management device implements the method according to any one of claims 10 to 17.

25. A computer-readable storage medium, wherein the computer-readable storage medium is configured to store program code executed by a processor, and the program code comprises instructions for implementing the method according to any one of claims 1 to 9, or the program code comprises instructions for implementing the method according to any one of claims 10 to 17.
